# EUROPEAN PATENT APPLICATION

(11) **EP 1 568 954 A2**
(43) Date of publication of application: **31.08.2005**
(21) Application number: 05101275.5
(22) Date of filing: 21.02.2005
(51) Int. Cl.: F25B 41/00, F16L 55/02

(54) **Pipe structure of outdoor unit in air conditioner**

(30) Priority: 25.02.2004 KR 2004012684
(71) Applicant: LG ELECTRONICS INC., Seoul 150-875 (KR)
(72) Inventor: LEE, Jung Woo, SEOUL (KR); CHIN, Sim Won, Gyeonggi-do (KR); BAE, Seong Won, SEOUL (KR); JUNG, In Hwa, SEOUL (KR)
(74) Representative: Ekström, Nils

(57) **Abstract**

Disclosed is a structure of an outdoor unit in an air conditioner, capable of reducing vibration of the pipes even more, by providing a damping member (16) for making different pipes connected each other so that the vibration system of the pipes inside the machinery room may be changed.

## Description

### BACKGROUND OF THE INVENTION

### Field of the Invention

The present invention relates to a pipe structure of an air conditioner, and more particularly, to a pipe installed around a compressor among elements of an outdoor unit, a pipe structure of the air conditioner, capable of reducing vibration transferred to an absorption/discharging pipe of the compressor and a plurality of connection pipes.

Also, the present invention relates to a pipe structure of the air conditioner, capable of maintaining, in a more compact manner, a structure of a machinery room where the compressor is arranged, and making the manufacturing process of the air conditioner convenient.

### Description of the Related Art

Generally, an air conditioner is an apparatus for controlling temperature and/or humidity of a system desired by a user, by circulating, inside the system, a cooling air generated through compression, condensation, expansion, and evaporation of refrigerant.

Such an air conditioner includes an indoor unit positioned in an indoor and an outdoor unit positioned in an outdoor, for emitting undesired heat or a cooling air. In the meantime, to the inside of the outdoor unit, an outdoor heat exchanger for exchanging heat, an outdoor fan for generating forced wind tunnel, and a compressor for forcibly flowing a refrigerant inside a cooling cycle, are generally provided. Since generating a noise during its operation, the compressor is generally positioned in the outdoor unit so that noi se environment in the indoor may be improved.

However, recently, as the space of the indoor environment gets narrow, the indoor space gets close to the installation position of the outdoor unit and noise from the outdoor unit is frequently transferred to the indoor space. Under such an environment, an effort to reduce the noise occurring during operation of the outdoor unit is being made. Particularly, in case the outdoor unit and the indoor unit are positioned inside the same apparatus such as a window-type air conditioner, the problem related to the noise is caused more seriously.

In the meantime, the noise from the outdoor unit is roughly divided into a noise occurring during operation of the outdoor fan and a noise occurring during operation of the compressor. The present invention is mainly directed to improve the noise occurring during operation of the compressor. Generally, the noise occurring at the compressor is transferred through a pipe. More specifically, vibration occurring at the compressor is transferred through the absorption and the discharging pipes connected to the compressor and a plurality of connection pipes formed inside the machinery room, and amplified by mutual interference, and changed into big vibration and noise in case vibration reaches resonance.

The method of the related art applied to suppress vibration of the pipe, reduces delivering force of vibration occurring at each of pipes by forming a concentrated mass body on a predetermined position of each pipe. However, according to the related art method, only local vibration of each pipe is attenuated, but the whole vibration at a pipe concentrated part is not attenuated effectively. Also, since an individual concentrated mass body should be installed on each of the pipes, installation job is difficult to carry out.

Also, to overcome the difficulty of separately installing the concentrated mass body, the method, wherein the concentrated mass body is installed only at the pipe where big vibration occurs, e.g., only at the absorption pipe of the compressor, has been suggested. However, even in such a method, there exists a weak point that vibration and fatigue destruction still occur at a small pipe where an amount of vibration is relatively small.

### SUMMARY OF THE INVENTION

Accordingly, the present invention is directed to a pipe structure of an outdoor unit in an air conditioner that substantially obviate one or more problems due to limitations and disadvantages of the related art.

An object of the present invention is to provide a pipe structure of an outdoor unit in an air conditioner that can effectively reduce vibration by making a plurality of pipes formed in the outdoor unit, bound into one single vibration system.

Another object of the present invention is to provide a pipe structure of an outdoor unit in an air conditioner, having great convenience in manufacturing the outdoor unit and low manufacturing costs, by forming a single damping member.

Still another object of the present invention is to provide a pipe structure of an outdoor unit in an air conditioner, capable of reducing vibration and noise on the whole, occurring in the whole outdoor unit and the whole vibration system of the pipes bounded in its part as a group.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims thereof as well as the appended drawings.

To achieve these objects and other advantages in accordance with the purpose of the invention, as embodied and broadly described herein, there is provided a pipe structure of an outdoor unit in an air conditioner, including: a compressor; more than two pipes through which a refrigerant compressed by the compressor flows; and a damping member for connecting at least two pipes each other among the pipes to change a vibration system of the connected pipes.

In another aspect of the present invention, there is provided a pipe structure of an outdoor unit in an air conditioner, including: a compressor disposed in a machinery room of the outdoor unit in the air conditioner; more than two pipes which communicate with the compressor and through which a refrigerant flows; and a damping member which contacts and connects each other at least more than two pipes among the pipes such that vibration of the pipes is transferred to a new vibration system and is then attenuated.

In still another aspect of the present invention, there is provided a pipe structure of an outdoor unit in an air conditioner, including: a barrier which partitions a space of an outdoor unit such that a machinery room is formed at either side of the outdoor unit; a compressor installed in an inside of the machinery room, for compressing a refrigerant; a pipe which communicates with the compressor and through which a refrigerant flows; and a damping member which connects at least more than two pipes among the pipes such that vibration system of the pipes is changed and vibration of the pipes is reduced.

According to the present invention, the whole vibration occurring at the outdoor unit is further reduced. Also, convenience in installing the damping member is further improved.

Furthermore, thanks to simplified construction and manufacturing process, manufacturing costs of the outdoor unit is reduced.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of an outdoor unit of the present invention;

Fig. 2 is a drawing partially showing a compressor and a pipe part of Fig. 1;

Fig. 3 is a cross-sectional view taken along line I-I' of Fig. 2;

Fig. 4 is a drawing explaining operation of an integral-type damping member according to the present invention;

Fig. 5 is a drawing showing a vibration generation amount at the state that each damping member is provided for each of the pipes before the damping member of the present invention is applied;

Fig. 6 is a drawing explaining a vibration generation amount at the state that the damping member of the present invention is applied; and

Fig. 7 is a drawing showing another embodiment of the present invention.

### DETAILED DESCRIPTION OF THE INVENTION

Reference will now be made in detail to the preferred embodiments of the present invention, examples of which are illustrated in the accompanying drawings.

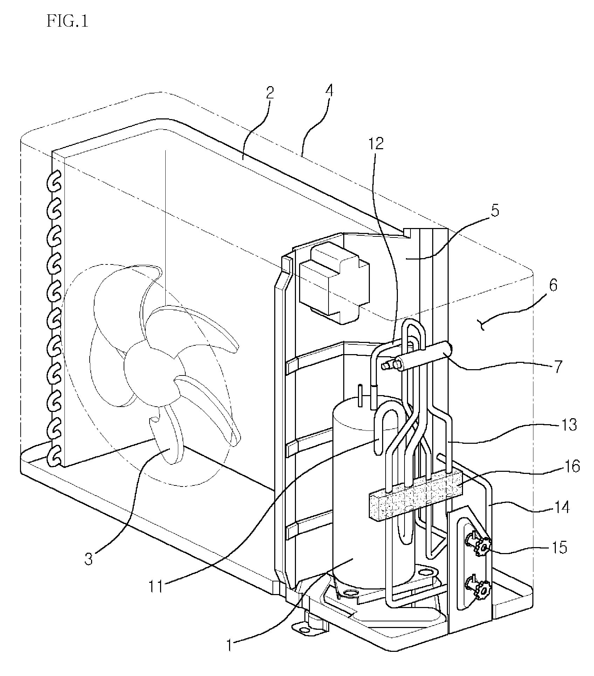

Fig. 1 is a perspective view of an outdoor unit of the present invention.

Referring to Fig. 1, the outdoor unit of the air conditioner includes: a case 4 constituting an appearance; a barrier 5 for partitioning an inner construction of the outdoor unit into two parts. By the barrier 5, the outdoor unit is divided into a region where an outdoor heat exchanger 2 and an outdoor fan 3 are formed so that forced wind tunnel is generated, and a machinery room 6 in which a compressor 1 is installed. Also, inside the machinery room 6, a four-way valve 7, pipes such as an absorption pipe 11, a discharging pipe 12, an indoor-connection pipe 13, and an outdoor-connection pipe 14 connected to the four-way valve 7, are installed. Also, a damping member 16 by which the pipes are connected each other so that a single vibration system is formed, is provided.

More specifically, a compressor 1 for compressing a refrigerant; an outdoor heat exchanger 2 for performing heat exchange in the outside; an outside fan 3 for apply ing forced wind tunnel effect on the outdoor heat exchanger 2; the four-way valve 7 for changing flowing direction of a refrigerant in a forward or a reverse directions within the cooling cycle so that the cooling cycle may be switched into an air conditioning cycle or a heat pump, are provided. Also, the absorption pipe 11 for connecting the four-way valve 7 with an absorption side of the compressor 1; the discharging pipe 12 for connecting the four-way valve 7 with a discharging side of the compressor 1; the indoor-connection pipe 13 for connecting the four-way valve 7 with a service valve 15; and the outdoor-connection pipe 14 for connecting the four-way valve 7 with the outdoor heat exchanger 2, are provided.

With priority given to the four-way valve, flowing of a refrigerant inside the pipe in the outdoor unit will be briefly described in the following. Flowing direction of a refrigerant inside the absorption pipe 11, the discharging pipe 12, the indoor-connection pipe 13, and the outdoor-connection pipe 14, can be controlled by the four-way valve 7. More specifically, if the discharging pipe 12 is connected with the outdoor-connection pipe 14 and the absorption pipe 11 is connected with the indoor-connection pipe 13, the air conditioner operates as the general air conditioner for cooling down the inside. On the contrary, if the discharging pipe 12 is connected with the indoor-connection pipe 13 and the absorption pipe 11 is connected with the outdoor-connection pipe 14, the air conditioner operates as the heat pump for heating the inside.

Also, on the part where the indoor-connection pipe 13 is projected, in its end, to the outside of the outdoor unit, a service valve 15 is formed. The service value 15 may be used for vacuum-forming of the inside of the pipe, temporarily stopping the air conditioner system, and discharging/injecting a refrigerant. The service valve 15 is projected on the outside of the outdoor unit case 10.

In the meantime, a plurality of pipes including the absorption pipe 11, the disc harging pipe 12, the indoor-connection pipe 13, and the outdoor-connection pipe 14, is formed, in a concentrating manner, on the position adjacent to either side of the compressor 1. By concentrating each pipe in this manner, it is possible to enhance use efficiency of the machinery room even more. Particularly, the damping member 16 connects the pipes each other, whereby vibration occurring at one pipe is transferred to other neighboring pipes through the damping member 16 and reduced accordingly. It is needless to say that vibration occurring at any of the pipes is transferred to the damping member 16, so that vibration is reduced by itself due to elastic force and mass of its own of the damping member 16. Also, at least any part of the damping member 16 is touched with the pipes, so that vibration may be transferred.

More specifically, for the damping member 16, a variety of shapes and materials may be used. Roughly, there exist the structure of reducing vibration using mass of the damping member and the structure of reducing vibration using stiffness of the damping member. On the first place, for the structure of reducing vibration using mass of the damping member, concentrated mass, a rubber, a butyl tape may be used. The damping member may be touched with the outer periphery of the pipe during its use.

Also, for the structure of reducing vibration using stiffness of the damping member, combinations of concentrated mass and a wire, concentrated mass and an aluminum tape, and a butyl tape and an aluminum tape, may be used to reduce vibration of the pipe. According to the present embodiment, though a single-body rubber of a predetermined shape makes a plurality of the pipes connected each other simultaneously so that vibration may be simultaneously reduced at a plurality of the pipes, it does not matter much whether one of the above-mentioned materials is used or a plurality of the damping members is simultaneously used. Also, for the pipes, the absorption pipe 11, the discharging pipe 12, the indoor-connection pipe 13, and the outdoor-connection pipe 14, are exemplarily mentioned, but the pipe is not limited to those pipes. The spirit of the present invention to reduce vibration can be applied to any pipe such as the indoor channel through which a refrigerant discharged from the outdoor heat exchanger 2 flows into the indoor unit.

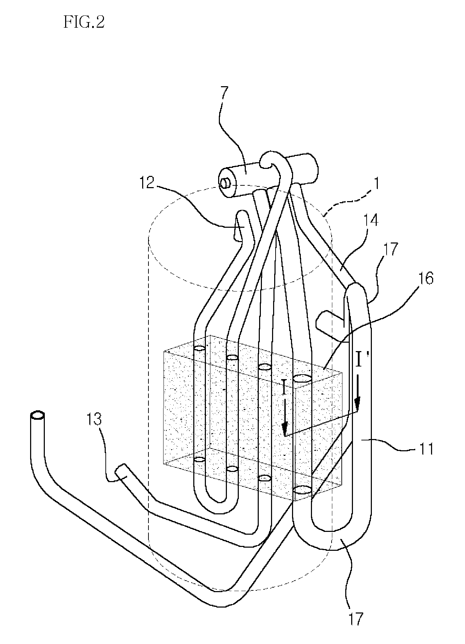

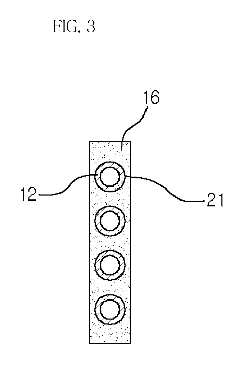

Fig. 2 is a drawing partially showing a compressor and a pipe part of Fig. 1, and Fig. 3 is a cross-sectional view taken along line I-I' of Fig. 2.

Referring to Figs. 2 and 3, a plurality of pipes 11, 12, 13, and 14, is formed on either side around the compressor 1, and the damping member 16 for binding the pipes 11, 12, 13, and 14 each other, is touched with outer peripheries of the pipes 11, 12, 13, and 14 at a predetermined position. Though the damping member 16 is illustrated in form of a rectangular parallelepiped, it is needless to say that the form may change depending on a shape, material of the pipes, and state of vibration occurrence.

Operation of the damping member 16 will be described. The damping member 16 made of rubber, reduces vibration transferred from one of pipes, e.g., the absorption pipe 11, using the damping member's action of its own. Also, the damping member 16 can reduce vibration even more by making str ong vibration occurring from the absorption pipe 11 transferred to other neighboring pipe, e.g., the indoor-connection pipe 13.

Transferring path of such vibration will be described in more detail in the following. Since the absorption pipe 11 has high stiffness and is close to the compressor 1, strong vibration occurs at the absorption pipe 11, but the indoor-connection pipe 13 is far distant away from the compressor 1 and has low stiffness, weak vibration occurs at the indoor-connection pipe 13. At this point, considering that the part where strong vibration occurs and the part where weak vibration occurs are locally discriminated as described above, the damping member 16 binds each other the pipe where strong vibration occurs as exemplified by the absorption pipe 11 with the pipe where weak vibration occurs as exemplified by the indoor-connection pipe 13, so that vibration may be transferred. By connecting vibrations of the pipes each other in this manner, strong vibration occurring at one pipe can be transferred to the neighboring pipe where weak vibration occurs, so that vibration occurrence amount of the whole pipe system is possibly reduced even more. In other words, by making a plurality of pipes whose vibration occurrence amounts are locally different bound in a single vibration system by means of the damping member 16, a vibration amount where strong vibration occurs can be transferred to the pipe where weak vibration occurs.

Resultantly, by making the pipe where strong vibration occurs locally, supported by both the damping member 16 and other pipe where weak vibration occurs, the whole vibration system of the pipes are changed and reduction effect in vibration and noise can be improved even more.

The damping member has, in its inside, a plurality of insertion holes 21 through which the pipes can pass, so that the pipes 11, 12, 13, and 14 are inserted in the up-down direction. Though four insertion holes are formed in Fig. 2, it will be obvious to a person of an ordinary skill in the art that a si ze and a number of the insertion holes 21 may change depending on the pipe structure of the outdoor unit. Also, though formed in the up-down direction according to Fig. 1, the insertion hole 21 may be formed in the right-left direction, or in the inclined direction, to receive the pipe, depending on the specific formation position of the pipe.

Also, the damping member 16 is installed to receive approximately the central parts of each pipe, so that vibration at the center of the pipe where the strongest vib ration occurs in the pipe, may be reduced in a reliable manner.

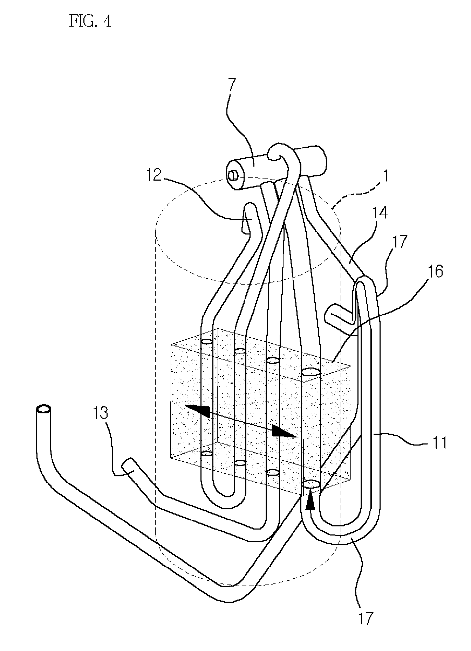

Fig. 4 is a drawing explaining operation of an integral-type damping member according to the present invention.

Reduction operation of vibration will be described with the absorption pipe taken as an example, referring to Fig. 4.

If vibration is transferred through connection of one end of the absorption pipe 11 with the compressor 1, vibration is reduced on the first place while passing through a curved part 17 formed on a predetermined position of the absorption pipe 11. The curved part 17 is formed on two portions in the absorption pipe 11 so that vibration may be reduced. An arrow represents a transferring path of vibration.

Though the curved part 17 is formed, a straight pipe at a predetermined position, formed long in up-down direction of the absorption pipe, moves as a single rigid body. Therefore, between one end of a vibration application point (one end of the straight pipe) and the other end of the vibration application point (the other end of the straight pipe), relatively big vibration as a rigid body occurs. By making such big vibration absorbed by means of the damping member 16, vibration can be reduced. For that purpose, the damping member 16 may be formed on the straight pipe portion in the pipe structure. Also, by installing the damping member 16 on the straight pipe portion in the pipe structure, forming process of the damping member 16 can be more convenient.

As described above, thanks to the curved part 17 and the damping member 16 formed on the straight pipe in the pipe structure, an effect that vibration occurring at the pipe structure is reliably reduced, can be obtained.

Particularly, since strong vibration occurring at the absorption pipe 11 is transferred to other neighboring pipe by way of the damping member 16, the whole vibration system of the pipes can be changed. In this manner, the vibration system of the pipes is changed, so that strong vibration locally occurring at either of the pipes is absorbed in the whole vibration system inside the machinery room in the outdoor unit, particularly in the pipe where weak vibration occurs, whereby the whole vibration of the inside of the machinery room is reduced.

In the meantime, since the whole vibration of the pipes is not concentrated on one of pipes but absorbed inside the whole vibration system and changed, resonance effect which may occur at a specific pipe can be prevented. In other words, it is expected that resonance phenomenon occurring at a specific pipe due to amplification of vibration which may occur in one of the pipes is suppressed, for the vibration at the specific pipe is absorbed in other pipe, whose frequency is different or where weak vibration occurs, and in the damping member 16.

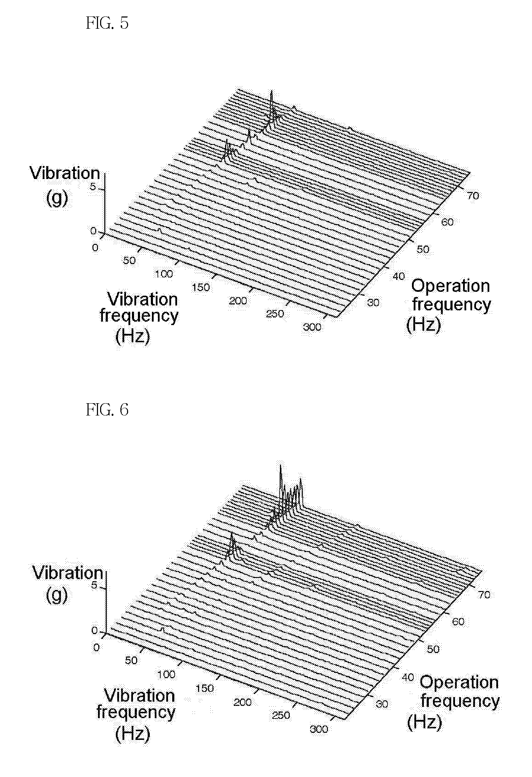

Fig. 5 shows vibration occurring amount at the state where different damping members are installed for each pipe before the damping member of the present invention is applied, and Fig. 6 shows vibration occurring amount at the state where the damping member of the present invention is applied with same conditions of Fig. 5.

In Figs. 5 and 6, with operation frequency assigned on one axis, vibration frequency on another axis, and vibration amount on still another axis, it is revealed that the vibration at the state of Fig 6 is re duced even more compared with the vibration at the state of Fig 5.

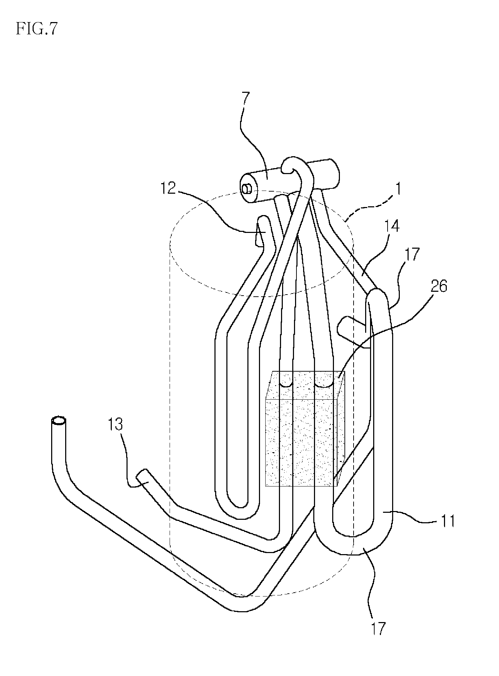

Fig. 7 is a drawing showing another embodiment of the present invention.

Referring to Fig. 7, the present embodiment is the same as the foregoing embodiment except that pipe binding is not applied to the whole pipes inside the machinery room in the outdoor unit but to one pair of the neighboring pipes, so that the neighboring pipes may be bound each other and vibration may be reduced. In the drawing, it is shown that the absorption pipe 11 and the indoor connection pipe 13 are mutually bound by means of the damping member 26. Since change of the vibration system related to the absorption pipe 11 and the indoor connection pipe 13 can be obtained in the same manner as described in the foregoing embodiment, more large reduction effect in vibration and noise can be achieved. Namely, each pipe vibrating in different vibration system and vibration mode is connected each other to be incorporated into one new vibration system and vibration mode, whereby resonance and noise that may occur at each pipe can be suppressed.

As described above, the damping member 16 or 26 is installed on the whole pipe system or more than two pipes selected, whereby vibration occurring at the inside of the machinery room in the outdoor unit can be reduced in a more reliable manner.

Such a pipe structure of the outdoor unit in the air conditioner, can be applied not only to an outdoor unit of a heat pump, general heating/cooling system, but also to an outdoor unit of an air conditioner for cooling operation, an outdoor unit of a multi-type air conditioner, and an outdoor unit of an air conditioner having an accumulator as well.

According to the present invention, vibration/noise inside the outdoor unit can be reduced even more. Also, installation process of the damping member is performed in a convenient manner, whereby convenience in manufacturing the damping member and reduction in manufacturing costs are expected. Also, since the vibration system in the pipe of the outdoor unit can be controlled by one vibration system, vibration control gets convenient.

Also, since the pipes are concentrated on either side of the compressor where the damping member is installed, the compactness of the machinery room can be improved and smallsizing of the outdoor unit can be achieved.

It will be apparent to those skilled in the art that various modifications and variations can be made in the present invention. Thus, it is intended that the present invention covers the modifications and variations of this invention provided they come within the scope of the appended claims and their equivalents.

## Claims

1. A pipe structure of an outdoor in an air conditioner, comprising:
a compressor;
more than two pipes through which a refrigerant compressed by the compressor flows; and
a damping member for connecting at least two pipes each other among the pipes to change a vibration system of the connected pipes.

2. The pipe structure according to claim 1, wherein the damping member is selected from the group consisting of concentrated mass, a rubber, a butyl tape, and a wire.

3. The pipe structure according to claim 1, wherein the damping member has an insertion hole into which the pipe is inserted.

4. The pipe structure according to claim 1, wherein the damping member is formed on a central part of any one pipe among the pipes.

5. The pipe structure according to claim 1, wherein the damping member is connected with pipes having different vibration amounts.

6. The pipe structure according to claim 1, wherein the pipes comprise more than two pipes selected from the group consisting of an absorption pipe, a discharging pipe, an indoor connection pipe, an outdoor connection pipe, and an indoor channel.

7. The pipe structure according to claim 1, wherein the damping member connects all the pipes depending on kinds of the pipes.

8. The pipe structure according to claim 1, wherein the damping member is of a hexahedral shape.

9. The pipe structure according to claim 1, wherein the pipes are concentrated on either side of the compressor so that the machinery room may be compactly constructed.
